# EUROPÄISCHE PATENTSCHRIFT

(11) **EP 2 776 193 B1**
(45) Veröffentlichungstag und Bekanntmachung des Hinweises auf die Patenterteilung: **23.09.2015**
(21) Anmeldenummer: 12778618.4
(22) Anmeldetag: 06.10.2012
(51) Int. Cl.: B23B 31/16

(54) **SPANNFUTTER EINER WERKZEUGMASCHINE ZUR BEARBEITUNG EINES ROHRFÖRMIGEN, ROTIERENDEN WERKSTÜCKS**
CHUCK FOR A MACHINE TOOL FOR MACHINING A TUBULAR, ROTATING WORKPIECE
MANDRIN DE SERRAGE D'UNE MACHINE-OUTIL POUR L'USINAGE D'UNE PIÈCE TUBULAIRE ROTATIVE

(30) Priorität: 08.11.2011 DE 102011117883
(43) Veröffentlichungstag der Anmeldung: 17.09.2014
(73) Patentinhaber: SMS Meer GmbH, 41069 Mönchengladbach (DE)
(72) Erfinder: Esser, Karl-Josef, 41179 Mönchengladbach (DE); DERIX, Rainer, 52525 Heinsberg (DE)
(74) Vertreter: Grosse, Wolf-Dietrich Rüdiger
(86) Internationale Anmeldenummer: PCT/EP2012/004199
(87) Internationale Veröffentlichungsnummer: WO 2013/068065

(56) Entgegenhaltungen:
- EP-A1- 2 383 058
- EP-A2- 0 069 917
- DE-A1- 19 930 784
- DE-A1-102009 053 679

## Beschreibung

Die Erfindung betrifft ein Spannfutter einer Werkzeugmaschine gemäß dem Oberbegriff des Patentanspruchs 1 zur Bearbeitung eines rohrförmigen, um eine mit der Mitte des Spannfutters zusammenfallenden Drehachse rotierenden Werkstücks, umfassend mindestens zwei zum Lösen und Spannen des Werkstücks radial zur Drehachse anstellbar ausgebildete, stirnseitig auf und gleichförmig über den Umfang einer Spannfutter-Kopfplatte verteilt angeordnete, Spannbacken tragende Spannschieber. Ein solches Spannfutter geht beispielsweise aus der EP 2 383 058 A1 hervor.

Eine Werkzeugmaschine zur Bearbeitung der Rohrenden, insbesondere zum Schneiden von Gewindeanschlüssen, des um eine Drehachse rotierenden rohrförmigen Werkstücks ist aus der DE 10 2009 053 679 A1 bekannt. Das Rohrgewinde wird in der Regel bei einmaligem Überfahren der üblich in einem Revolverkopf angeordneten Werkzeuge über das Rohrende des eingespannten rohrförmigen Werkstücks bzw. Rohres hergestellt, wobei die Bewegungen der Werkzeuge numerisch gesteuert werden. Zum Einspannen des Rohres besitzt eine Werkzeugmaschine vorne, dort wo der Revolverkopf mit den Werkzeugen zum Einsatz kommt ein Vorderendfutter und an der rückwärtigen Seite ein Hinterendfütter, die das Rohr konzentrisch zur Drehachse spannen. Ein Bearbeitungszentrum mit minimal zwei gegenüberliegenden Werkzeugmaschinen ist entsprechend mit vier Spannfuttern ausgerüstet. Sowohl das Vorderend- als auch das Hinterendspannfutter weist zum Lösen und Spannen des Werkstücks vorzugsweise drei Spannschieber mit Spannbacken auf.

Bei solchen Gewindeschneid-Maschinen mit drehendem Rohr und Revolverköpfen mit aufgesetzten, über NC-Achsen gesteuerten Werkzeugen erfordert die Bearbeitung zumindest zwei Spannfunktionen. Die Rohre müssen sich erstens mit direkter Ausrichtung zur Maschinenmitte zentrisch und zweitens mit Anpassung an extern zentrisch gespannte Rohre ausgleichend spannen lassen. Das ausgleichende Spannen mittels der Spannschieber bedeutet, dass sich die Spannschieber an das über die Länge gegebenenfalls etwas gekrümmte Rohr ausgleichend und somit nicht genau zentrisch anlegen können müssen. Das erlaubt dann auch eine Anpassung an zudem extern zentrisch eingespannte Rohre. Unter einem externen zentrischen Spannen wird eine zusätzliche Einspannung der aus dem Vorderendfutter herausragenden Rohrenden im Bereich bzw. nahe der später zu fertigenden Gewinde verstanden. Derartige Spannfutter, insbesondere Vorderendspannfutter, sind daher sehr komplex und bei in der Praxis bekannten Ausführungen erfolgt das Spannen und Lösen der Spannschieber bzw. der von diesen getragenen Spannbacken über Keilsysteme mit rechtwinkliger Umlenkung parallel zur Mitte bzw. Drehachse des Spannfutters. Das bedingt große Durchmesser und Längen der Spannfutter mit entsprechend großer, für den Betrieb nachteiliger Masse.

Der Erfindung liegt daher die Aufgabe zugrunde, ein Spannfutter der eingangs genannten Art mit verbesserten Betriebseigenschaften zu schaffen.

Diese Aufgabe wird erfindungsgemäß durch die Merkmale des Patenanspruchs 1 gelöst. Es lässt sich somit eine Beweguhgsumlenkung ohne Keilsysteme parallel zur Mitte des Spannfutters über den Eingriff der durch das Stellmittel beaufschlagbaren Querschieber mit den Spannschiebern in der Ebene der Kopfplatte sogleich rechtwinklig zur Drehachse erreichen. Damit ergibt sich eine geringere Masse einhergehend mit einer erhöhten Dynamik sowie verkürzten Hochlauf- und Abbremszeiten der nach jeder Bearbeitung unvermeidlichen Zyklen. Beim Spannen und Lösen des Rohres übertragen große Flächen, nämlich die der Mitnehmerklaue und die der Führungsnut, in der formschlüssig gleitend sich die Mitnehmerklaue bei Stellbewegungen des Querschiebers zwangsgeführt verschiebt, hohe Kräfte mit günstiger Flächenpressung. Das zentrische und ausgleichende Spannen erfordert keine Vergrößerung der Bauhöhe bzw. -länge des Spannfutters. Das zentrische Spannen erfolgt über die separat mit jeweils einem Spannschieber verbundenen Zahnräder, deren Synchronlauf und damit auch der der drei Zahnräder das eingerückte Kopplungsritzel gewährleistet, während bei ausgerücktem Kopplungsritzel ein ausgleichendes Spannen ermöglicht wird.

Eine bevorzugte Ausführung der Erfindung sieht vor, dass das ein- und ausrückbare Kopplungsritzel in der eingerückten Endlage mit allen drei Zahnrädern und in der ausgerückten Endlage mit nur einem Zahnrad im Eingriff ist. Das Ein- und Ausrücken des Kopplungsritzels kann manuell, von der Vorderseite des Spannfutters bzw. der Kopfplatte her frei zugänglich, erfolgen, wobei sich bei ausgerücktem Kupplungsritzel alle drei Schiebersysteme und die dazugehörenden Zahnräder unabhängig voneinander bewegen, außermittig an das Rohr anpassen und dieses spannen können.

Nach einem Vorschlag der Erfindung sind der Querschieber und der Spannschieber sich schräg kreuzend mit einem den Stellhub des Querschiebers mit Untersetzung auf den Anstellhub des Spannschiebers übertragenen Eingriffswinkel von Mehrnehmerklaue und Führungsnut angeordnet. Wenn dieser Winkel 30° beträgt, lässt sich eine Untersetzung von 1 zu 2 (sin 30° entspricht 0,5) erreichen, was das schnelle Spannen und Lösen begünstigt.

Nach einer Ausgestaltung der Erfindung wird als Stellmittel der Querschieber ein Zylinder vorgesehen, wobei der Schieberblock der Querschieber über eine Kolbenstange mit dem Zylinderkolben verbunden ist. Die notwendigen Bewegungen beim Spannen und Lösen lassen sich somit in einfacher Weise durchführen.

Nach einem vorteilhaften Vorschlag der Erfindung ist in der Spannfutter-Kopfplatte axial parallel verlaufend zum Kopplungsritzel ein sich mit dem Kopplungsritzel bewegungsabhängig verlagernder, mit seinem vorderen Endabschnitt in der Kopfplatte von außen sichtbarer, die ein- und ausgerückte Lage des Kopplungsritzels erkennbar machender Positionsanzeigebolzen angeordnet. Der Maschinenbediener hat somit stets genaue Kenntnis über die jeweilige Funktionslage des Kopplungsritzels und kann je nach Bearbeitungserfordernis (zentrisch mit direkter Ausrichtung zur Maschinenmitte oder ausgleichend Spannen) das Kopplungsritzel entsprechend ein- bzw. ausrücken.

Weitere Merkmale und Einzelheiten der Erfindung ergeben sich aus den Ansprüche und der nachfolgenden beschreibung eines in den Zeichnungen dargestellten Ausführungsbeispiels der Erfindung. Es zeigen:
- Fig. 1: als Einzelheit einer Werkzeugmaschine ein Spannfutter, in der Vorderansicht perspektivisch dargestellt;
- Fig. 2: das Spannfutter der Fig. 1 in einem Querschnitt, perspektivisch dargestellt;
- Fig. 3: eine wie Fig. 2 rückwärtige, hier schematische Ansicht des Spannfutters als Prinzipskizze mit Zuordnung der Querschieber zu den Spannschiebern in sich unter einem Eingriffswinkel schräg kreuzender Lage;

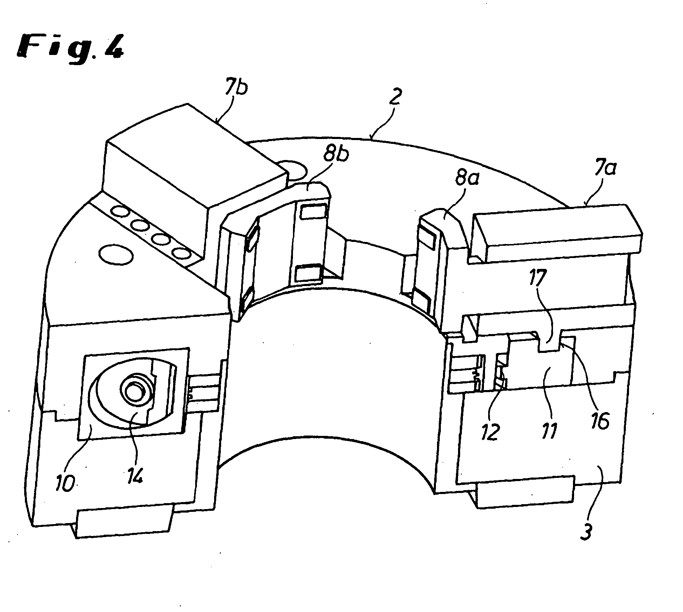

- Fig. 4: das Spannfutter der Fig. 1 in einem Längsschnitt etwa entlang der Linie IV-IV; und
- Fig. 5: als Teilansicht des Spannfutters einen Längsschnitt durch ein in drei jeweils separat mit den Spannschiebern verbundenen Zahnrädern ein- und ausrückbares Kopplungsritzel.

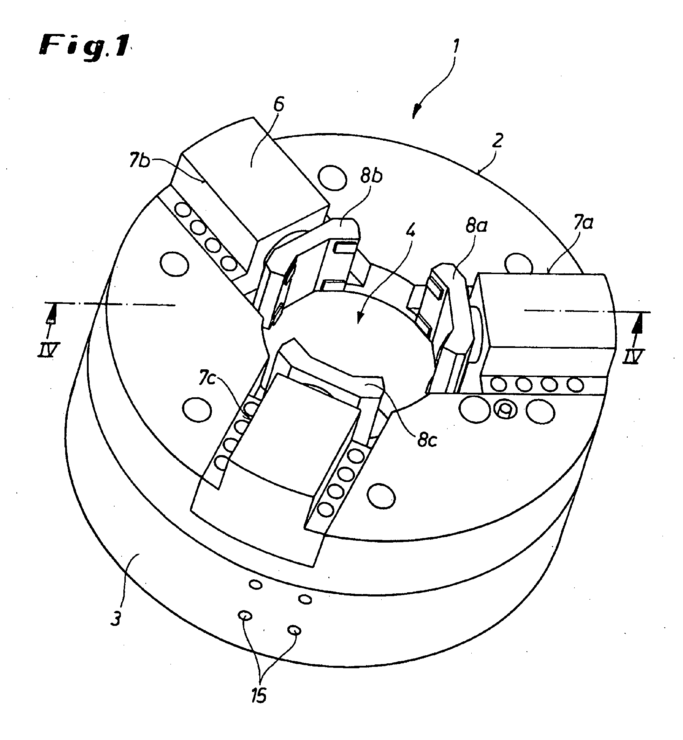

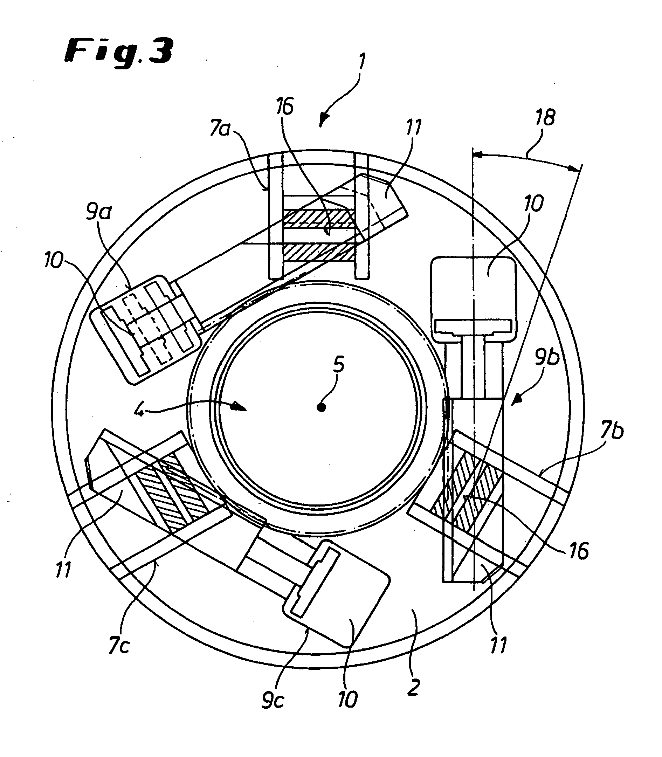

Ein in Fig. 1 gezeigtes Spannfutter 1 einer Werkzeugmaschine zum Schneiden von Gewinden bzw. Gewindeanschlüssen an Rohrenden besteht aus einer Kopfplatte 2 und einem sich nach hinten anschließenden Gehäusering. Zum Aufnehmen eines zu bearbeitenden Rohres (nicht dargestellt) besitzt das Spannfutter 1 eine zentrische Durchgangsöffnung 4 deren Mitte 5 mit der Drehachse des in dem Spannfutter rotierenden Rohres zusammenfällt. Auf der Stirnseite der Kopfplatte 2 sind mit über den Umfang gleichmäßiger Verteilung drei von Abdeckungen 6 eingehauste, radial zur Mitte bzw. Drehachse 5 anstellbare Spannschieber 7a, b, c mit Spannbacken 8a, b, c angeordnet, die das Rohr zentrisch zur Mitte bzw. Drehachse 5 (vgl. Fig. 3) spannen.

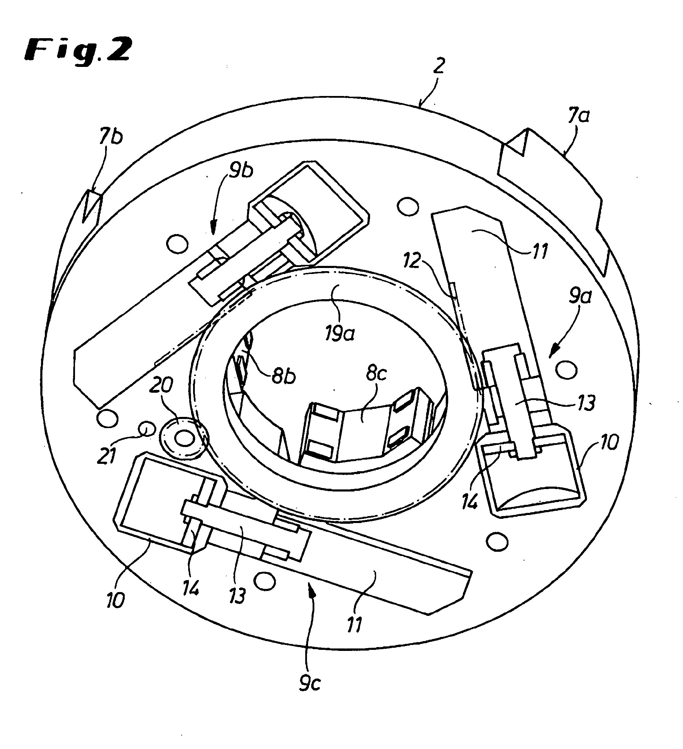

Zum Anstellen der Spannschieber 7a, b, c mit den Spannbacken 8a, b, c in Richtung auf die Mitte bzw. zur Drehachse 5 des Spannfutters 1 ist jedem Spannschieber 7a, b, c tangential zur Drehachse 5 ein in der Kopfplatte 2 integrierter Querschieber 9a, b, c zugeordnet. Diese bestehen, wie der Fig.2 zu entnehmen ist, aus einem Hydraulikzylinder 10 als Stellmittel und einem Schieberblock 11, der an einer Längsseite als Zahnstange 12 ausgebildet ist, wobei der Schieberblock 11 über eine Kolbenstange 13 mit dem Zylinderkolben 14 verbunden ist. Zur Beaufschlagung der Zylinderkolben 14 sind die Hydraulikzylinder 10 über Druckmittelanschlüsse 15 (vgl. Fig. 1) mit einer nicht dargestellten Druckmittelversorgung verbunden.

An ihrer in Fig. 2 in der Zeichnungsebene hinten liegenden Oberseite sind die Schieberblöcke 11 mit einer schräg verlaufenden, kulissenartigen Führungsnut 16 ausgebildet, in die eine an der Unterseite der Spannschieber 7a, b, c vorgesehene Mitnehmerklaue 17 unter einem Eingriffswinkel 18 (vgl. die Schemazeichnung Fig. 3) von vorzugsweise 30° eingreift. Bei Beaufschlagung der Hydraulikzylinder 10 wird die Mitnehmerklaue 17 zwangsgeführt in der Führungsnut 16 verlagert, wobei die Spannbacken 8a, b, c in Richtung auf die Mitte bzw. Drehachse 5 des Spannfutters aus den Spannschiebern 7a, b, c herausgerückt werden. Der Schrägverlauf mit dem Eingriffswinkel 18 ermöglicht eine schnelle, kurzhubige Anstellung der Spannbacken 8a, b, c, beispielsweise bei einem Hub der Querschieber 9a, b, c von 50mm mit einem Anstellhub von 25mm.

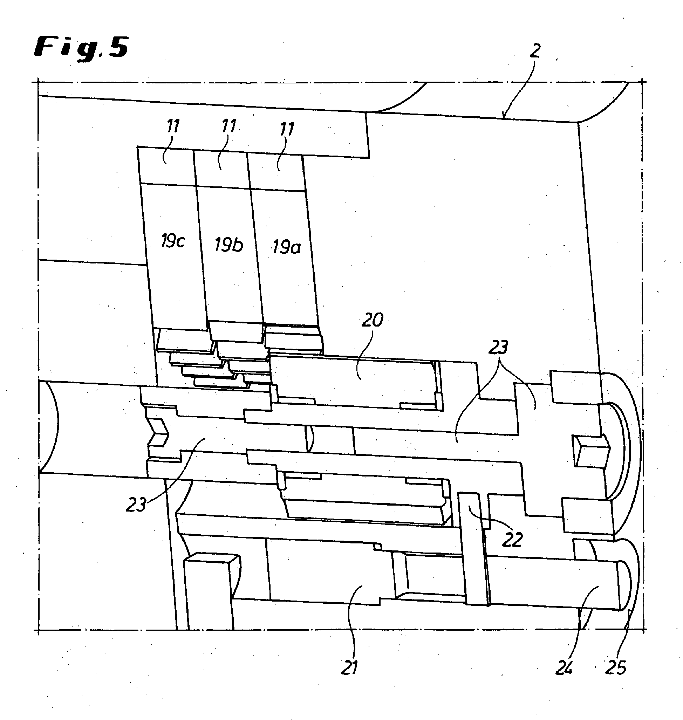

Jedem Querschieber 9a, b, c ist in dem Spannfutter 1 konzentrisch zur mittigen Durchgangsöffnung 4 von außen nach innen aufeinanderfolgend ein Zahnrad 19a, b, c zugeordnet (vgl. Fig. 5) von denen in Fig. 2 lediglich das äußere bzw. vordere Zahnrad 19a zu erkennen ist. Die Hydraulikzylinder 10 greifen mit den Zahnstangen 12 ihrer Schieberblöcke 11 in das ihnen jeweils zugeordnete Zahnrad 19a bzw. 19b bzw. 19c ein. Den Zahnrädern 19a, b, c ist ein axial zur Drehachse 5 ein- und ausrückbares Kopplungsritzel 20 zugeordnet (vgl. die Fig. 2 und 5), das in eingerückter Position mit allen Zahnrädern 19a, b, c kämmt, womit ein Synchronlauf der drei Zahnräder 19a, b, c und damit der Spannschieber 7a, b, c zum zentrischen Spannen eines Rohres erreicht werden kann.

Wenn hingegen ein ausgleichendes Spannen durchgeführt werden soll, wird das Kopplungsritzel 20 ausgerückt und ist dann nur noch mit einem, dem äußeren Zahnrad 19a im Eingriff. Es können sich somit alle drei Schiebersysteme mit den jeweils verbundenen Zahnrädern unabhängig bewegen, außermittig an das Rohr anpassen und dieses spannen.

Wie sich der einen Teilausschnitt des Spannfutters zeigenden Fig. 5 entnehmen lässt, ist axial parallel verlaufend zum Kopplungsritzel 20 ein sich mit diesem bewegungsabhängig verlagernder Positionsanzeigebolzen 21 angeordnet, hier über eine Stange bzw. einen Steg 22 mit dem Kopplungsritzel 20 verbunden. Bei im Ausführungsbeispiel manueller Ein- und Ausrückbarkeit des Kopplungsritzels 20, wozu Schraubgewindebolzen 23 zum Einsatz kommen, verlagert sich der Positionsanzeigebolzen 21 entsprechend nach innen oder nach außen, wobei ein die jeweilige Lage erkennbar machender vorderer Endabschnitt 24 entweder mehr (Kopplungsritzel 20 greift in alle Zahnräder 19a, b, c ein) oder weniger (das Kopplungsritzel 20 kämmt nur mit dem oberen bzw. vordersten Zahnrad 19a) in eine Ausnehmung (Bohrung) 25 der Spannfutter-Kopfplatte 2 eintaucht.

Das beschriebene Spannfutter 1 eignet sich sowohl als Hinterend- als auch insbesondere Vorderendspannfutter und erfüllt die geforderten Spannfunktionen eines mit direkter Ausrichtung zur Maschinenmitte zentrischen Spannens und/oder eines ausgleichenden Spannens der zu bearbeitenden Rohre.

### Bezugszeichenliste:

- 1: Spannfutter
- 2: Kopfplatte
- 3: Gehäusering
- 4: Durchgangsöffnung
- 5: Mitte (des Spannfutters)/Drehachse eines eingespannten Rohres
- 6: Abdeckung / Gehäuse
- 7a, b, c: Spannschieber
- 8a, b, c: Spannbacke
- 9a, b, c: Querschieber
- 10: Hydraulikzylinder
- 11: Schieberblock
- 12: Zahnstange
- 13: Kolbenstange
- 14: Zylinderkolben
- 15: Druckmittelanschluss
- 16: kulissenartige Führungsnut
- 17: Mitnehmerklaue
- 18: Eingriffswinkel
- 19a, b, c: Zahnrad
- 20: Kopplungsritzel
- 21: Positionsanzeigebolzen
- 22: Steg/Stange
- 23: Schraubgewindebolzen
- 24: Endabschnitt (des Positionsanzeigebolzens)
- 25: Ausnehmung (Bohrung in der Kopfplatte)

## Patentansprüche

1. Spannfutter (1) einer Werkzeugmaschine zur Bearbeitung eines rohrförmigen, um eine mit der Mitte des Spannfutters zusammenfallenden Drehachse (5) rotierenden Werkstücks, umfassend mindestens zwei zum Lösen und Spannen des Werkstücks radial zur Drehachse (5) anstellbar ausgebildete, stirnseitig auf und gleichförmig über den Umfang einer Spannfutter-Kopfplatte (2) verteilt angeordnete, Spannbacken (8 a, b, c) tragende Spannschieber (7a, b, c),
wobei jedem Spannschieber (7a, b, c) einerseits in der Kopfplatte (2) tangential zur Drehachse (5) vorgesehene, von einem Stellmittel (10) beaufschlagte Querschieber (9a, b,c), **dadurch gekennzeichnet, daß** die Querschieber (9a,b,c) einen an einer Längsseite als Zahnstange (12) ausgebildeten Schieberblock (11) aufweisen, und andererseits separate, mit den Zahnstangen (12) kämmende Zahnräder (19a, b, c) zugeordnet sind, wobei jeder Spannschieber (7a, b, c) an seiner Unterseite mit einer Mitnehmerklaue (17) versehen ist, die zur Umlenkung der Bewegung des Querschiebers (9a, b, c) in eine rechtwinklig zur Drehachse (5) verlaufende Anstellbewegung des Spannschiebers (7a, b, c) mit einer in dem Schieberblock (11) des Querschiebers (9a, b, c) vorgesehenen, kulissenartigen Führungsnut (16) im Eingriff ist, und wobei den Zahnrädern (19a, b, c) ein axial zur Drehachse (5) ein- und ausrückbares Kopplungsritzel (20) zugeordnet ist.

2. Spannfutter nach Anspruch 1,
**dadurch gekennzeichnet,**
**dass** die Querschieber (9a, b, c) und die Spannschieber (7a, b, c) sich schräg kreuzend, mit einem den Stellhub des Querschiebers (9a, b, c) mit Untersetzung auf den Anstellhub des Spannschiebers (7a, b, c) übertragenden Eingriffswinkel (18) von Mitnehmerklaue (17) und Führungsnut (16) angeordnet sind.

3. Spannfutter nach Anspruch 1 oder 2,
**dadurch gekennzeichnet,**
**dass** das ein- und ausrückbare Kopplungsritzel (20) in der eingerückten Endlage mit allen drei Zahnrädern (19a, b, c) und in der ausgerückten Endlage nur mit einem Zahnrad (19a) im Eingriff ist.

4. Spannfutter nach einem der Ansprüche 1 bis 3,
**gekennzeichnet durch**
Zylinder (10) als Stellmittel der Querschieber (9a, b, c), deren Schieberblock (11) über eine Kolbenstange (13) mit dem Zylinderkolben (14) verbunden ist.

5. Spannfutter nach einem der Ansprüche 1 bis 4,
**dadurch gekennzeichnet,**
**dass** in der Spannfutter-Kopfplatte (2) axial parallel verlaufend zum Kopplungsritzel (20) ein sich mit dem Kopplungsritzel (20) bewegungsäbhängig verlagernder, mit seinem vorderen Endabschnitt (24) in der Kopfplatte (2) von außen sichtbarer, die ein- bzw. ausgerückte Lage des Kopplungsritzels (20) erkennbar machender Positionsanzeigebolzen (21) angeordnet ist.

## Claims

1. A clamping chuck (1) of a machine tool for machining a tubular workpiece rotating about a rotational axis (5) coincident with the centre of the clamping chuck, comprising at least two clamping slides (7a, b, c) carrying clamping jaws (8a, b, c), which slides are adjustably constructed for releasing and clamping the workpiece radially to the rotational axis (5) and arranged in a distributed manner at the end-face on and uniformly over the circumference of a clamping-chuck top plate (2),
wherein one the one hand, transverse slides (9a b, c) provided in the top plate (2) tangentially to the rotational axis (5) and loaded by an adjustment means (10), are assigned to each clamping slide (7a, b, c) on the one hand,
**characterised in that** the transverse slides (9a, b, c) have a slide block (11) constructed on a longitudinal side as a toothed rack (12), and separate toothed wheels (19a, b, c), which engage with the toothed racks (12), are assigned to each clamping slide on the other hand, wherein each clamping slide (7a, b, c) is provided on the underside thereof with a driving claw (17), which is engaged with a link-like guide groove (16) provided in the slide block (11) of the transverse slide (9a, b, c), for diverting the movement of the transverse slide (9a, b, c) into an adjusting movement of the clamping slide (7a, b, c) running perpendicularly to the rotational axis (5), and wherein a coupling pinion (20), which can be engaged and disengaged axially to the rotational axis (5), is assigned to the toothed wheels (19a, b, c).

2. The clamping chuck according to claim 1,
**characterised in that**
the transverse slides (9a, b, c) and the clamping slides (7a, b, c) are arranged in a mutually intersecting manner, with an angle of engagement (18) of driving claw (17) and guide groove (16), which transfers the actuating travel of the transverse slide (9a, b, c) with reduction to the adjusting travel of the clamping slide (7a, b, c).

3. The clamping chuck according to claim 1 or 2,
**characterised in that**
the coupling pinion (20), which can be engaged and disengaged, is engaged with all three toothed wheels (19a, b, c) in the engaged end position and only with one toothed wheel (19a) in the disengaged end position.

4. The clamping chuck according to one of claims 1 to 3,
**characterised by**
cylinders (10) as adjustment means of the transverse slides (9a, b, c), the slide block (11) of which is connected via a piston rod (13) to the cylinder piston (14).

5. The clamping chuck according to one of claims 1 to 4,
**characterised in that**
a position indicator bolt (21), which is displaced in a movement-dependent manner with the coupling pinion (20), can be seen in the top plate (2) from the outside by means of the front end section (24) thereof and allows the recognition of the engaged or disengaged position of the coupling pinion (20), is arranged running axially parallel to the coupling pinion (20) in the clamping-chuck top plate (2).

## Revendications

1. Mandrin de serrage (1) d'une machine-outil, pour le traitement d'une pièce usinée tubulaire en rotation autour d'un axe de rotation (5) coïncidant avec le centre du mandrin de serrage, comprenant au moins deux coulisseaux de serrage (7a, b, c) portant des joues de serrage (8a, b, c), conçus de manière à pouvoir être appliqués radialement par rapport à l'axe de rotation (5) pour le détachement et le serrage de la pièce usinée et agencés du côté frontal sur une plaque supérieure (2) du mandrin de serrage et répartis uniformément sur le pourtour de celle-ci,
dans lequel chaque coulisseau de serrage (7a, b, c) est pourvu d'une part de coulisseaux transversaux (9a, b, c) précontraints par un moyen de réglage (10), prévus dans la plaque supérieure (2), tangentiellement à l'axe de rotation (5),
**caractérisé en ce que** les coulisseaux transversaux (9 a, b, c) comportent un bloc de coulisseau (11) conçu comme une crémaillère (12) sur un côté longitudinal, et pourvu d'autre part de roues dentées (19a, b, c) engrenant avec les crémaillères (12), chaque coulisseau de serrage (7a, b, c) étant pourvu sur son côté inférieur d'une patte d'entraînement (17) en prise avec une rainure de guidage (16) du genre coulisse, prévue dans le bloc de coulisseau (11) du coulisseau transversal (9a, b, c), pour dévier le mouvement du coulisseau transversal (9a, b, c) en un mouvement d'application du coulisseau de serrage (7 a, b, c) effectué en angle droit par rapport à l'axe de rotation (5), et un pignon d'accouplement (20) engrenable et désengrenable axialement par rapport à l'axe de rotation (5) étant attribué aux roues dentées (19a, b, c).

2. Mandrin de serrage selon la revendication 1,
**caractérisé en ce que**
les coulisseaux transversaux (9a, b, c) et les coulisseaux de serrage (7a, b, c) sont agencés de manière à se croiser en biais, avec un angle d'attaque (18) entre la patte d'entraînement (17) et la rainure de guidage (16) transmettant de façon démultipliée la course de réglage du coulisseau transversal (9a, b, c) à la course d'attaque du coulisseau de serrage (7a, b, c).

3. Mandrin de serrage selon la revendication 1 ou 2,
**caractérisé en ce que**
le pignon d'accouplement (20) engrenable et désengrenable est en prise avec les trois roues dentées (19a, b, c) dans la position finale engrenée, et en prise avec une seule roue dentée (19a) dans la position finale désengrenée.

4. Mandrin de serrage selon l'une des revendications 1 à 3,
**caractérisé par**
des cylindres (10) en tant que moyen de réglage des coulisseaux transversaux (9a, b, c) dont les blocs de coulisseau (11) sont reliés au piston de cylindre (14) par le biais d'une tige de piston (13).

5. Mandrin de serrage selon l'une des revendications 1 à 4,
**caractérisé en ce que**
un boulon d'indication de position (21) est agencé dans la plaque supérieure (2) du mandrin de serrage, en s'étendant axialement parallèlement au pignon d'accouplement (20), indiquant la position engrenée ou désengrenée du pignon d'accouplement (20) et se déplaçant en fonction du mouvement du pignon d'accouplement (20), tout en étant visible de l'extérieur avec sa section finale avant (24) dans la plaque supérieure (2).
